# EUROPEAN PATENT APPLICATION

(11) **EP 4 650 292 A1**
(43) Date of publication of application: **19.11.2025**
(21) Application number: 25174467.8
(22) Date of filing: 06.05.2025
(51) Int. Cl.: B65D 5/50, B65D 81/113, B65D 81/05

(54) **PACKING MEMBER**

(30) Priority: 09.05.2024 JP 2024076485
(71) Applicant: KYOCERA Document Solutions Inc., Osaka-shi, Osaka 540-8585 (JP)
(72) Inventor: KITAMOTO, Yu, Osaka-shi, Osaka, 540-8585 (JP)
(74) Representative: Heuer, Wilhelm

(57) **Abstract**

A packing member (1) formed by bending a single sheet material includes a floor (2), a first side wall (3), and a pair of second side walls (4). The first side wall (3) has a through-hole (3h) penetrating it in the first direction (D1). The pair of second side walls (4) have projection segments (4d) and slits (4e). The projection segments (4d) are inserted in the through-hole (3h) and project outward in the first direction (D1) beyond the first side wall (3). The slits (4e) are formed at a position adjacent to the outer surface of the first side wall (3) of the projection segments (4d) with the projection segments (4d) inserted in the through-hole (3h) and the slits have opening edges (4de) at the ends of the projection segments (4d) close to the floor (2) and extend in the direction away from the floor (2) up to a predetermined position.

## Description

### BACKGROUND

The present disclosure relates to a packing member.

Conventionally, a packing member formed by bending into a predetermined three-dimensional shape a single sheet material (blank) made of, for example, cardboard or the like is widely used. Such a packing member keeps its three-dimensional shape with a combination of slits, cutouts, holes, projections, and the like.

### SUMMARY

An object of the present disclosure is to provide a pecking member that, with a configuration that prevents displacement of its parts, can keep its three-dimensional shape firmly.

According to one aspect of the present disclosure, a packing material formed by bending a single sheet material includes a floor, a first side wall, and a pair of second side walls. The floor is in a rectangular shape. The first side wall is formed by being bent substantially perpendicularly with respect to the floor from one end of the floor in the first direction and has a through-hole penetrating it in the first direction. The pair of second side walls are formed by being bent from opposite ends of the floor in the second direction orthogonal to the first direction. The floor has a projection arranged adjacent to the end of the through-hole close to the floor and extends outward in the first direction beyond the first side wall. The pair of second side walls have projection segments and slits. The projection segments are inserted, with their surfaces in contact with each other, in the through-hole and project outward in the first direction beyond the first side wall. The slits are formed at a position adjacent to the outer surface of the first side wall of the projection segments with the projection segments inserted in the through-hole and, having opening edges at the ends of the projection segments close to the floor, extend in the direction away from the floor up to a predetermined position.

### BRIEF DESCRIPTION OF THE DRAWINGS

Fig. 1 is a perspective view of a packing member according to one embodiment of the present disclosure.
Fig. 2 is an enlarged perspective part view of only the packing member in Fig. 1.
Fig. 3 is a development view of the packing member in Fig. 2.
Fig. 4 is an enlarged perspective part view of the packing member in Fig. 1.
Fig. 5 is a side sectional view of the packing member in Fig. 2.

### DETAILED DESCRIPTION

Hereinafter, an embodiment of the present disclosure will be described with reference to the drawings. The present disclosure is not limited to the following description. In the following description, the direction indicated by arrow D1 in the drawings is a "first direction" (the longitudinal direction of a packing member 1) and the direction indicated by arrow D2 in the drawings is a "second direction" (the lateral direction of the packing member 1). The first and second directions are orthogonal to each other.

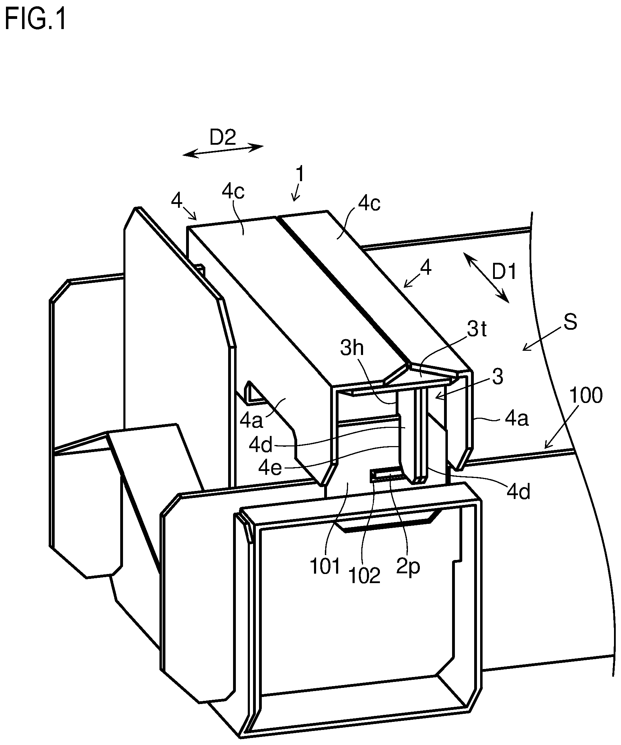

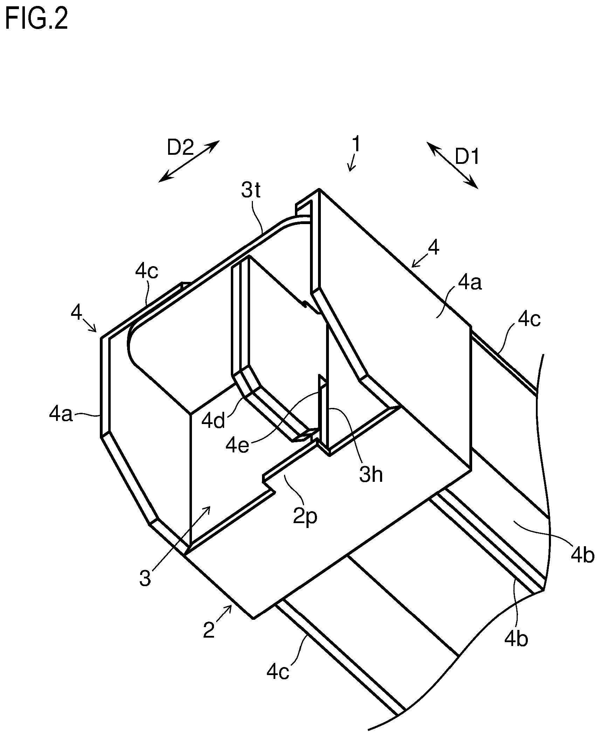

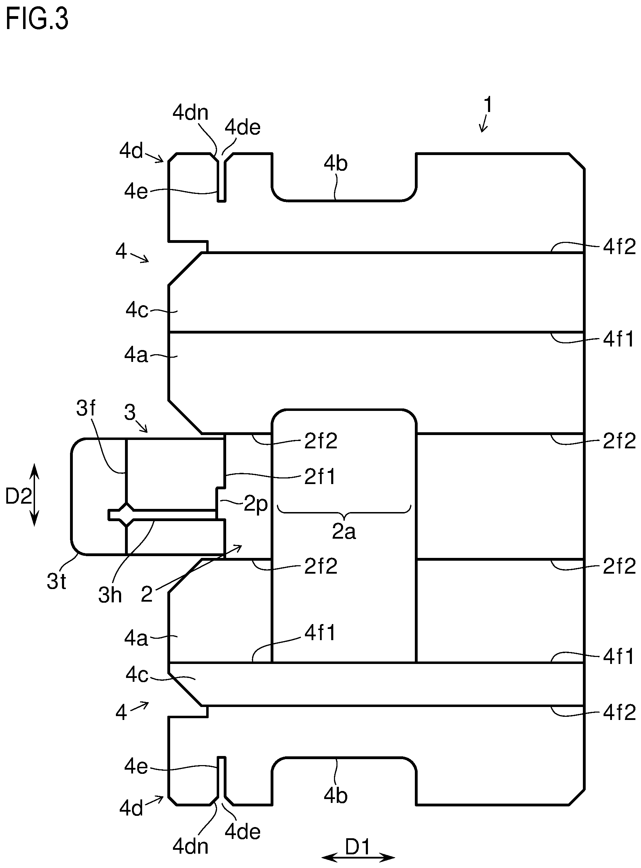

Fig. 1 is a perspective view of a packing member 1 according to the embodiment. Fig. 2 is an enlarged perspective part view of only the packing member 1 in Fig. 1. Fig. 3 is a development view of the packing member 1 in Fig. 2. Fig. 1 depicts a state where the packing member 1 according to the embodiment is combined with another packing member 100.

As shown in Figs. 1 and 2, the packing member 1 has a substantially rectangular parallelepiped outer shape elongate along the first direction D1. The packing member 1 is, for example as shown in Fig. 1, used in combination with another packing member 100 formed in a substantially U-shape as viewed from the first direction D1. The other packing member 100 has a storage space S inside it for a packed article (not shown).

When unfolded, the packing member 1 appears as shown in the development view in Fig. 3. In its unfolded, flat state, the packing member 1 is a single sheet material (blank) in a substantially rectangular outer shape formed of, for example, cardboard. That is, the packing member 1 is formed by bending a single sheet material.

The packing member 1 has a floor 2, a first side wall 3, and a pair of second side walls 4.

The floor 2 is arranged in substantially a middle part of the sheet material packing member 1 in a flat state along the longer-side direction (up-down direction in Fig. 3). The floor 2 is in a rectangular shape as seen in a plan view and extends along the first direction D1 (left-right, sideways direction in Fig. 3) as viewed from the up-down direction. The floor 2 is in a form divided with a gap 2a provided in a middle part along the first direction D1.

The first side wall 3 is arranged outside of one end of the floor 2 in the first direction D1 in the sheet material packing member 1 in a flat state. The first side wall 3 is formed by being bent substantially perpendicularly with respect to the floor 2 from one end of the floor 2 in the first direction D1. Specifically, the first side wall 3 is formed by being bent upward along a fold line 2f1 provided at one end of the floor 2 in the shorter-side direction (the first direction D1) and extending along the second direction D2 in the sheet material packing member 1 in a flat state. The first side wall 3 extends along the second direction D2 and the up-down direction in the packing member 1 in its assembled state shown in Figs. 1 and 2.

The pair of second side walls 4 are arranged outside of opposite ends of the floor 2 in the longer-side direction (up-down direction in Fig. 3), across the floor 2 in the sheet material packing member 1 in a flat state. The pair of second side walls 4 are formed by being bent upward from circumferential edges (fold lines 2f2) of the floor 2. Specifically, the pair of second side walls 4 are formed by being bent upward along two fold lines 2f2 provided away from each other in the longer-side direction across the floor 2 and extending along the first direction D1 in the sheet material packing member 1 in a flat state.

In other words, the pair of second side walls 4 are formed by being bent from opposite ends of the floor 2 in the second direction D2. The pair of second side walls 4 are arranged opposite each other in the second direction D2. The pair of second side walls 4 extend along the first direction D1 and the up-down direction in the packing member 1 in its assembled state shown in Figs. 1 and 2.

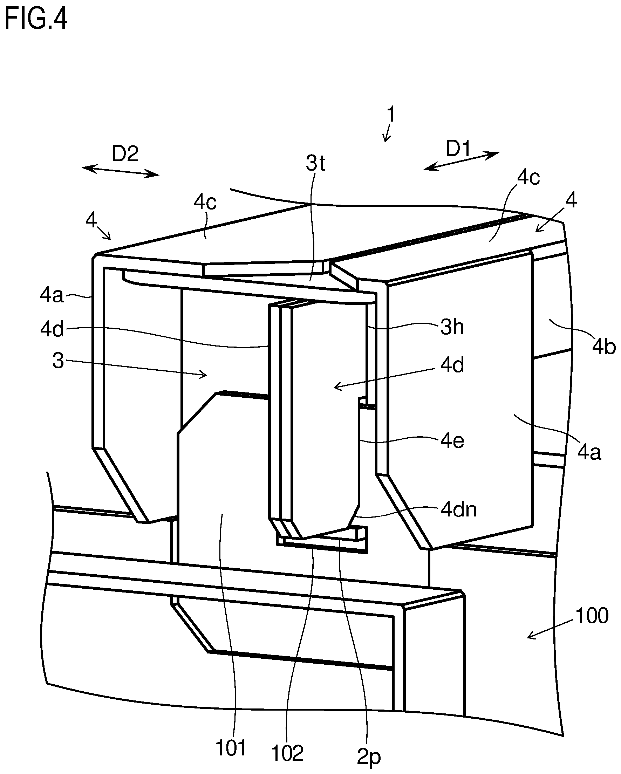

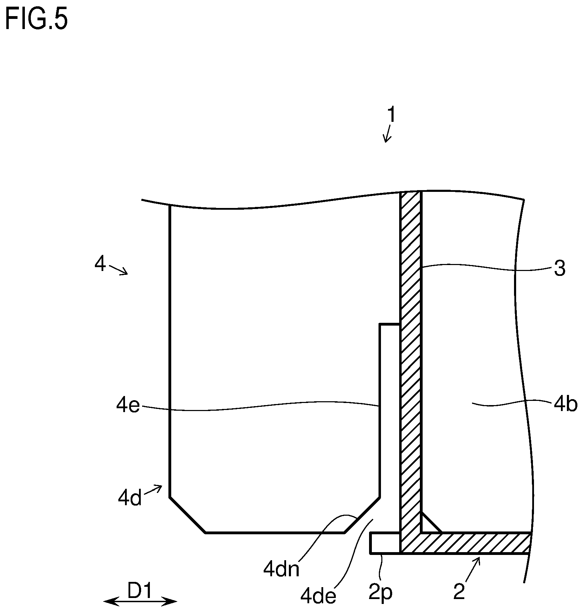

Next, the configuration of the packing member 1 will be described in detail with reference to Figs. 4 and 5 in addition to Figs. 1, 2, and 3. Fig. 4 is an enlarged perspective part view of the packing member 1 in Fig. 1. Fig. 5 is a side sectional view of the packing member 1 in Fig. 2. Like Fig. 1, Fig. 4 shows a state where the packing member 1 according to the embodiment is combined with another packing member 100 and is an enlarged view around the first side wall 3.

The first side wall 3 has a tongue segment 3t and a through-hole 3h.

The tongue segment 3t is arranged at one end of the first side wall 3 in the shorter-side direction (the first direction D1) in the sheet material packing member 1. The tongue segment 3t is arranged at the upper end of the first side wall 3 in the packing member 1 in its assembled state shown in Figs. 1 and 2. The tongue segment 3t is formed by being bent in the first direction D1 substantially parallel to the floor 2 along a fold line 3f extending along the second direction D2 parallel to the fold lone 2f1. The tongue segment 3t extends outward in the first direction D1 along the bottom surface of upper ends 4c of the pair of second side walls 4. With respect to the first direction D1, the position of the tip of the tongue segment 3t substantially coincides with the position of the ends of the upper ends 4c of the second side walls 4.

The through-hole 3h extends from the end of the first side wall 3 close to the floor 2 over to the tongue segment 3t in the sheet material packing member 1. In other words, the through-hole 3h extends from the floor 2 to the upper ends 4c of the pair of second side walls 4 in the up-down direction, and is formed in a rectangular shape as viewed from the first direction D1 in the packing member 1 in its assembled state shown in Figs. 1 and 2. The through-hole 3h penetrates the first side wall 3 in the first direction D1.

The floor 2 has a projection 2p. The projection 2p is arranged adjacent to the end of the through-hole 3h close to the floor 2. That is, the projection 2p is arranged below the first side wall 3 in the packing member 1 in its assembled state shown in Figs. 1 and 2. The projection 2p extends outward beyond the first side wall 3 in the first direction D1. The projection 2p is formed in a rectangular shape extending in the second direction D2 as viewed from below. The projection 2p extends longer than the width of the through-hole 3h in the second direction D2.

The pair of second side walls 4 are formed in an inverted U-shape as viewed from the first direction D1 by being bent inward in the second direction D2. The pair of second side walls 4 have outer walls 4a and inner walls 4b respectively. The outer and inner walls 4a and 4b extend along the up-down direction and the first direction D1 in the packing member 1 in its assembled state shown in Figs. 1 and 2.

The outer walls 4a are located outside the inner walls 4b and face outside the packing member 1. The lower ends of the outer walls 4a are connected to the floor 2. The outer walls 4a are formed by being bent perpendicularly upward along fold lines 2f2 located at the boundary with the floor 2 and extending along the first direction D1. The upper ends of the outer walls 4a are connected to the upper ends 4c.

The upper ends 4c are formed by being bent perpendicularly to the side along fold lines 4f1 located at the boundary with the outer walls 4a and extending along the first direction D1. The upper ends 4c are formed in a flat plate shape extending along the first direction D1 and the second direction D2 and face outside the packing member 1. The inner ends of the upper ends 4c in the second direction D2 far from the outer walls 4a are connected to the inner walls 4b.

The inner walls 4b are formed by being bent perpendicularly downward along fold lines 4f2 located at the boundary with the upper ends 4c and extending along the first direction D1. The inner walls 4b of the pair of second side walls 4 are located inside the packing member 1 in the second direction D2. The inner walls 4b of the pair of second side walls 4 are arranged adjacent to each other with their surfaces in contact with each other. The lower ends of the inner walls 4b make contact with the top surface of the floor 2.

The pair of second side walls 4 further have projection segments 4d and slits 4e respectively.

The projection segments 4d extend continuously parallel to the inner walls 4b, outward in the first direction D1. The projection segments 4d of the pair of second side walls 4 are arranged adjacent to each other with their surfaces in contact with each other. The projection segments 4d of the pair of second side walls 4 are inserted, with their surfaces in contact with each other, into the through-hole 3h in the first side wall 3. The projection segments 4d project outward of the first side wall 3 in the first direction D1. With respect to the first direction D1, the position of the tips of the projection segments 4d substantially coincides with the position of the tip of the tongue segment 3t of the first side wall 3 and the position of the tips of the upper ends 4c of the second side walls 4.

The slits 4e are arranged adjacent to the projection segments 4d. Specifically, the slits 4e are formed at a position adjacent to the outer surface of the first side wall 3 of the projection segments 4d with the projection segments 4d inserted in the through-hole 3h. The slits 4e, having opening edges 4de at the ends of the projection segments 4d close to the floor 2, extend in the direction away from the floor 2 up to a predetermined position. In other words, the slits 4e, having opening edges 4de at the lower ends of the projection segments 4d, extend upward up to a predetermined height. The slits 4e are formed in a rectangular shape as viewed from the second direction D2. The slits 4e penetrates the projection segments 4d in the second direction D2.

As shown in Fig. 4, the other packing member 100 combined with the packing member 1 of the embodiment has an engagement segment 101 and an engagement hole 102 provided in it.

With the above configuration of the packing member 1 of the embodiment, it is possible to insert the engagement segment 101 of the other packing member 100 into the slits 4e. Further providing the engagement hole 102 in the engagement segment 101 makes it possible to insert the projection 2p into the engagement hole 102. Inserting the engagement segment 101 into the slits 4e and inserting the projection 2p into the engagement hole 102 in the engagement segment 101 prevents the first side wall 3 falling in the first direction D1. That is, the displacement of the first side wall 3 can be prevented. Thus, the packing member 1, with its configuration that prevents the displacement of its parts, can keep its three-dimensional shape firmly.

As shown in Fig. 5, the projection segments 4d have cutouts 4dn. The cutouts 4dn are formed at the opening edges 4de of the slits 4e. The cutouts 4dn are inclined to the extending direction of the slits 4e. In other words, the cutouts 4dn are formed adjacent to the opening edges 4de of the slits 4e and are inclined to the up-down direction, which is the extending direction of the slits 4e.

With the configuration described above, at the opening edges 4de of the slits 4e, that is, at the entrance for the engagement segment 101 of the other packing member 100 to the slits 4e, it is possible to provide a clearance between the projection 2p and the projection segments 4d. This makes it easy to insert the engagement segment 101 into the slits 4e. It is thus possible to enhance the ease of assembly of the packing member 1.

As shown in Fig. 5, the cutouts 4dn are formed to extend outward in the first direction D1 beyond the end of the projection 2p as viewed from the second direction D2 (the near-far direction with respect to the plane of Fig. 5). With this configuration, it is possible to secure a larger clearance between the projection 2p and the projection segments 4d. It is thus possible to further enhance the ease of assembly of the packing member 1 without impairing the holding of the engagement segment 101 in the slits 4e.

The embodiment of the present disclosure described above is not meant to limit the scope of the disclosure.

## Claims

1. A packing member (1) formed by bending a single sheet material, comprising:
a floor (2) in a rectangular shape;
a first side wall (3) formed by being bent substantially perpendicularly with respect to the floor (2) from one end of the floor (2) in a first direction (D1), the first side wall (3) being penetrated by a through-hole (3h) in the first direction (D1); and
a pair of second side walls (4) formed by being bent from opposite ends of the floor (2) in a second direction (D2) orthogonal to the first direction (D1);
**characterized in that**
the floor (2) has a projection (2p) arranged adjacent to an end of the through-hole (3h) close to the floor (2) and extending outward in the first direction (D1) beyond the first side wall (3), and
the pair of second side walls (4) have
projection segments (4d) inserted, with surfaces thereof in contact with each other, into the through-hole (3h) and projecting outward in the first direction (D1) beyond the first side wall (3), and
slits (4e) formed at a position adjacent to an outer surface of the first side wall (3) of the projection segments (4d) with the projection segments (4d) inserted in the through-hole (3h), the slits having opening edges (4de) at the ends of the projection segments (4d) close to the floor (2) and extending in a direction away from the floor (2) up to a predetermined position.

2. The packing member (1) according to claim 1, **characterized in that**
the projection segments (4d) have cutouts (4dn) formed at the opening edges (4de) of the slits (4e) and inclined with respect to an extending direction of the slits (4e).

3. The packing member (1) according to claim 2, **characterized in that**
the cutouts (4dn) are formed to extend outward in the first direction (D1) beyond a tip of the projection (2p) as viewed from the second direction (D2).
